# EUROPÄISCHE PATENTSCHRIFT

(11) **EP 0 869 304 B1**
(45) Veröffentlichungstag und Bekanntmachung des Hinweises auf die Patenterteilung: **05.06.2002**
(21) Anmeldenummer: 98104532.1
(22) Anmeldetag: 13.03.1998
(51) Int. Cl.: F16L 9/12, F16L 11/06, F16L 9/133, F16L 11/04, B29C 47/06, B29D 23/00

(54) **Rohr aus thermoplastischem Kunststoff**
Thermoplastic pipe
Tuyau en thermoplastique

(30) Priorität: 02.04.1997 DE 29622788 U
(43) Veröffentlichungstag der Anmeldung: 07.10.1998
(73) Patentinhaber: REHAU AG + Co, 95111 Rehau (DE)
(72) Erfinder: Baumgärtel, Christof, 95111 Rehau (DE); Bröcker, Manfred, 95111 Rehau (DE)

(56) Entgegenhaltungen:
- EP-A- 0 174 611
- WO-A-84/01988
- DE-A- 3 207 742
- FR-A- 2 726 345
- GB-A- 2 297 137
- US-A- 3 561 493

## Beschreibung

Die Erfindung betrifft ein Rohr aus thermoplastischem Kunststoff, bestehend aus wenigstens zwei Schichten von Thermoplasten unterschiedlicher Eigenschaften, wobei das Innenrohr als tragende Rohrschicht an seinem Außenumfang von einer als Schutzmantel dienenden Deckschicht ummantelt ist.

Derartige Mehrschichtrohre sind umfangreich bekannt. Als Beispiel wird hier auf die EP 0 337 037 B1 verwiesen. Das dort beschriebene Mehrschichtrohr besteht aus einem Trägerrohr aus einem vernetzten Polyethylen hoher Dichte und einem Außenmantel aus unvernetztem Polyethelen hoher Dichte. Dieses Rohr macht sich einerseits die günstigen Eigenschaften des vernetzten Polyethylens zunutze, die darin bestehen, daß Rohre aus diesem Material hohe chemische Beständigkeit und hohe Wärmebeständigkeit aufweisen, widerstandsfähig gegen Abrieb sowie unempfindlich gegen Spannungsrißkorrosion und Kerbverletzungen sind. Der Nachteil solcher Rohre aus vemetztem Polyethylen ist jedoch darin zu sehen, daß sie untereinander nur unzureichend oder überhaupt nicht verschweißbar sind. Weitere Mehrschichtrohre sind aus der EP-A-174 611 und der WO-A-8 401 988 bekannt.

Dieser Nachteil soll nach dem Stand der Technik dadurch umgangen werden, daß das vernetzte Polyethylen hoher Dichte wenigstens an der Außenseite mit einem Mantel aus nicht vernetztem, schweißbarem Polyethylen versehen wird.

Derartige Mehrschichtrohre können im Wege des Koextrusions-Verfahrens hergestellt werden. Wird für die Vernetzung des tragenden Polyethylen-Rohres die Methode der Silanvernetzung angewendet, so kann die Extrusion des tragenden Polyethylen-Rohres mit dem Silanvernetzer erfolgen, ohne daß beim Extrusionsvorgang eine Vernetzung eintreten würde. Diese Vernetzung erfolgt erst nachträglich, beispielsweise durch Lagerung der extrudierten Rohre in einer Feuchtatmosphäre.

Die Silanvemetzungsmethode hat also den Vorteil, daß die mit dem Vernetzer versehene Rohrschicht im Koextrusionsverfahren mit der schweißbaren Polyethylenschicht zu einem Mehrschichtenrohr extrudiert werden kann, wobei beim Extrusionsvorgang die beiden Schichten fest und innig miteinander verschweißen, was darin seinen Grund hat, daß der Vernetzer in der tragenden Rohrschicht noch nicht angesprungen ist.

Das auf diese Weise erzeugte Mehrschichtenrohr wird anschließend der Feuchtatmosphäre ausgesetzt, wodurch die tragende Rohrschicht vernetzt und die günstigen Eigenschaften des vernetzten Polyethylens erhält.

Das auf diese Weise hergestellte Mehrschichtenrohr mit einem Außenmantel aus unvernetztem Polyethylen kann, nach dem Stand der Technik, mit den üblichen Elektro-Schweißmuffen verbunden oder beispielsweise mit Formteilen und ähnlichen Gebilden verschweißt werden.

Mit den bekannten mehrschichtigen Rohren lassen sich beispielsweise durch Zusammenstecken von Rohrsträngen Rohrleitungen herstellen, die in einen Rohrgraben verlegt werden, der anschließend verfüllt wird. Da diese Verlegemethode einen hohen Verlegekostenaufwand erfordert, gehen die Überlegungen bei der Verlegung von Rohrleitungen für den Gas-, Wasser-, Kanal- und Sickerrohreinsatz mehr und mehr auf grabenlose Verlegetechniken zu, bei welchen mit unterschiedlichen Lösungsansätzen in den Boden meist horizontal verlaufende, zylindrische Hohlräume gebohrt oder gepreßt werden. In diese Hohlräume werden nachträglich oder in Kombination mit dem Bohrvorgang Rohrleitungen eingezogen. Hierbei kommt zum Tragen, daß diese in den Boden eingebrachten Bohrungen nicht glatt sind, sondern - abhängig vom anstehenden Boden - teilweise sehr rauh und abriebfördernd sind. Die in diese Erdbohrungen eingezogenen Rohrleitungen unterliegen deshalb beim Einziehvorgang starken mechanischen Belastungen an der Außenseite, die zu teilweise nicht akzeptablen Beschädigungen der Rohroberfläche führen. Die Lebenserwartung solcher beschädigten Rohrleitungen kann erheblich reduziert sein.

Die mit dem Einziehen in Erdbohrungen verlegten Rohrlängen können bis zu einigen 100 m lang sein.

Für ein problemloses Einziehen derartig langer Rohrleitungen ist es erforderlich, daß die zu verlegenden Rohre an der Außenseite glatt sind, d. h., daß keine überstehenden Rohrverbindungen vorhanden sind, die den Einziehvorgang erheblich beeinträchtigen können. Aus diesem Grunde sind Mehrschichtrohre mit Muffen nach dem Stand der Technik für diese Verlegetechniken ungeeignet.

Hinzu kommt noch, daß in der Regel diese Erdbohrungen nicht vollkommen gerade, sondern z. B. bogenförmig verlaufen, wenn mit einer Rohrleitung ein Fluß oder eine Straße unterquert werden soll. Dadurch wird die Reibung zwischen Rohr und Erdreich und damit der Abrieb zusätzlich erhöht.

Für die grabenlose Verlegetechnik werden also Rohrleitungen benötigt, die flexibel sind und in großen Längen ohne Rohrverbindungen hergestellt und transportiert werden können. Diese Anforderungen erfüllen in hohem Maße Rohre aus Polyethylen, die in Längen bis zu einigen 100 m auf Trommeln oder als Ringbunde hergestellt und geliefert werden können. Rohre aus Polyethylen sind jedoch kerbempfindlich und eignen sich aus diesem Grunde nicht ohne weiteres für die grabenlosen Verlegetechniken, denn durch die Baustellenbedingungen bestehen gerade sehr starke Beanspruchungen an der Rohraußenseite beim Einziehvorgang.

Um diesen Schwachpunkt zu kompensieren, können für diesen Anwendungsbereich beispielsweise Rohre mit größerer Wanddicke ausgewählt werden, bei denen die zu erwartende Restwanddicke den Innendruckbeanspruchungen im Betrieb standhält. Diese Lösung hat jedoch den Nachteil, daß bei einer notwendigen Beibehaltung des Rohraußendurchmessers für die Verwendung üblicher Verbindungselemente der Durchflußquerschnitt der Rohre durch die Wanddickenvergrößerung verringert wird.

Muß der Durchflußquerschnitt des Standardrohres beibehalten werden, geht die Erhöhung der Wanddicke voll in den Außendurchmesser des Rohres ein, so daß die Standard-Verbindungselemente nicht mehr eingesetzt werden können. Es ist auch schon vorgeschlagen worden, auf ein Standardrohr in einem zweiten Arbeitsgang einen Schutzmantel als Verschleißschicht aufzubringen.

Der Vorteil dieser Lösung ist, daß nach Abnahme der Verschleißschicht an den Verbindungsstellen mit dem verbleibenden Standardrohraußendurchmesser die üblichen Verbindungstechniken Verwendung finden können.

Nachteilig ist bei diesem Aufbau, daß durch den zusätzlichen Verschleißschutzmantel die Steifigkeit des Rohres um die Längsachse wesentlich erhöht und damit die Verlegung erschwert wird. Als weiterer Nachteil ist zu bezeichnen, daß bei Entfernung des Verschleißschutzmantels das Basisrohr am äußeren Umfang beschädigt werden kann, wenn hier unsauber gearbeitet wird. Die Entfernung des Verschleißschutzmantels in den Verbindungsbereichen ist zudem ein zusätzlicher Arbeitsgang, der diese Verlegetechnik kostenmäßig belastet.

Letztlich könnte das Produkt Rohr im vollen Wandquerschnitt aus einem verschleißfesten Material, z. B. aus einem vernetzten Polyethylen, hergestellt werden. Dies würde allerdings die Rohrkosten so erheblich verteuern, daß ein wirtschaftlicher Nutzen einer solchen Lösung nicht gegeben wäre.

Aus der DE 41 32 984 C1 ist ein mehrschichtiges Kunststoffrohr bekannt, das aus einem Kernrohr aus Polyolefin besteht, welches mit einer Schicht aus Polyvinylfluorid (PVDF) ummantelt ist. Die mechanische Stabilität dieses Schichtenaufbaus wird vom Kemrohr erbracht, während die PVDF-Beschichtung als Diffusionssperre dient. Die PVDF-Beschichtung kann zusätzlich durch eine Schutzschicht vor äußeren Einflüssen geschützt sein. Der Nachteil dieses Rohres ist die Verwendung des teuren PVDF.

Aus der DE 44 18 006 A1 ist ein weiteres mehrschichtiges Kunststoffrohr mit einem Basisrohr aus Polyolefin und einer Sperrschicht aus einem thermoplastischen Polyester bekannt. Beide Schichten dieses Aufbaus sind über eine geeignete Haftvermittlerschicht kohäsiv miteinander verbunden. Solche Rohre können als Trinkwasserrohre auch in kontaminierten Böden verlegt werden, da die Sperrschichten das Eindringen störender Geschacksstoffe u. ä. in das Durchflußgut verhindern.

Nachteilig ist bei dem Rohr mit der PDVF-Sperrschicht, daß diese lediglich durch ihr unterschiedliches Schrumpfverhalten auf dem Basisrohr festgelegt ist, während die Sperrschicht aus dem thermoplastischen Polyester mit dem Basisrohr verklebt werden muß.

Hier setzt die Erfindung ein, die es sich zur Aufgabe gestellt hat, ein für die grabenlose Verlegetechnik verschleißfestes Rohr aus thermoplastischem Kunststoff zu schaffen, bei dem ohne das Erfordernis des Entfernens einer Schutzschicht die üblichen Verbindungstechniken Verwendung finden können, bei dem zusätzlich der Durchflußquerschnitt im Vergleich zu einem Standardrohr nicht negativ beeinträchtigt wird und bei dem darüber hinaus eine Diffusionssperre geschaffen werden kann. Erfindungsgemäß wird dazu vorgeschlagen, daß der Thermoplast des Innenrohres ein Polyethylen hoher Dichte (PEHD) mit einer Langzeitfestigkeit > 8 N/mm² ist, daß die Deckschicht aus einem vernetzten Polyethylen (VPE) besteht, daß der Aufbau Innenrohr-Deckschicht in der Wanddicke des Gesamtquerschnitts identisch ist mit der Wanddicke eines 1-schichtigen Rohres aus Polyethylen hoher Dichte (PEHD) mit einer Langzeitfestigkeit gleich oder < 8 N/mm², und daß die Innendruckbelastbarkeit des Aufbaus Innenrohr-Deckschicht wenigstens der eines 1-schichtigen Rohres aus PEHD entspricht.

Die Erfindung macht sich die Tatsache zunutze, daß bei Beibehaltung der üblichen Normwanddicken für definierte Rohraußendurchmesser und definierte Druckstufen als Trägerrohrmaterial ein Polyethylen hoher Dichte mit höherer Festigkeit verwendet wird, bei dem eine geringere Wanddicke des Rohres gewählt werden kann.

Die verbleibende Restwanddicke für die außenliegende Verschleißschicht aus vernetztem Polyethylen (VPE) kann dann bis zur üblichen Normwanddicke ausreichend dick ausgelegt werden.

Die Vorteile dieser Maßnahmen liegen darin, daß durch die entsprechend einem Standardrohr gleichbleibende Rohrwanddicke die Flexibilität des Rohres trotz seiner Zwei-Schichtigkeit nicht reduziert wird. Bei der Koextrusion des Trägerrohres mit dem Verschleißschutzmantel verschweißen die beiden Materialtypen an der Kontaktstelle und sind dadurch unlösbar miteinander verbunden.

Obwohl diese Maßnahme bereits durch die EP 0 337 037 B1 bekannt ist, muß dieses Merkmal in diesem Zusammenhang als Vorteil erwähnt werden. Darüber hinaus ist ein Ablösen des Verschleißschutzmantels für das Herstellen von Rohrverbindungen mit handelsüblichen Verbindungselementen nicht mehr notwendig. Als weiterer Vorteil ist zu werten, daß durch extreme Abriebfestigkeit des Verschleißschutzmantels aus vernetztem Polyethylen (VPE) mit Oberflächenbeschädigungen die zu Schwierigkeiten bei der Herstellung von Rohrverbindungen führen könnten, nicht zu recnnen ist. Da das teure, verschleißfeste Material des Verschleißschutzmantels aus vernetztem Polyethylen nur etwa 1/3 bis max. 50 % der Rohrwand einnimmt, sind die Kosten für ein derartiges Rohr gegenüber einem Vollwandrohr aus vernetztem Polyethylen erheblich reduziert.

Es ist in der Praxis nicht auszuschließen, daß die Rohre bei Transport oder der Verlegung an der Außenseite Beschädigungen durch Abschabungen und Kerben erleiden, die die Lebenserwartung normaler Rohre aus PE 80 oder PE 100, je nach Größe der Schäden erheblich beeinflussen können.

Bei bestimmten Verlegeverfahren, z. B. den grabenlosen Verlegetechniken mit dem Spülbohrverfahren, werden PEHD-Rohre über sehr große Längen durch einen engen Erdkanal gezogen, wodurch zwangsläufig an der Außenseite bei ungünstigen Bodenbedingungen sehr starker Verschleiß auftreten kann.

Es ist natürlich möglich, diese Beeinträchtigungen der Festigkeit der Rohre durch die äußeren Schäden dadurch zu reduzieren, daß man dickere Rohre einsetzt und damit den normalen Sicherheitsfaktor erhöht. Das führt aber zwangsläufig dazu, daß bei Standardaußendurchmessern der Rohrinnendurchmesser durch die größere Wanddicke eingeschränkt wird, was man aus hydraulischen Gründen in der Regel nicht will. Außerdem ist die Kerbschlagempfindlichkeit bei PE 80 oder PE 100 der kritische Punkt. Die Festigkeit der Rohre wird nicht linear mit der abgetragenen Außenschicht oder der Kerbtiefe reduziert, sondern es spielt vor allem die Form der Kerbe, die Tiefe der Kerbe und die am Tiefpunkt der Kerbe vorhandene Spannung eine erhebliche Rolle für die Lebenserwartung des Rohres in diesem beschädigten Bereich.

Erfindungsgemäß wird die durch Materialabtragung und Kerbung gefährdete Außenschicht von normalen Rohren durch eine Schicht aus vernetztem Polyethylen ersetzt, die so stark gewählt ist, daß die in der Praxis zu erwartenden Kerben in keinem Fall tiefer sind als die Schutzschicht. Dadurch wird erreicht, daß die Kerbe im VPE-Bereich bleibt. Das VPE ist aufgrund seiner Materialstruktur absolut kerbunempfindlich, d. h., es besteht keine Gefahr, daß die Kerbe weiterreißt und letztlich auch zum Einreißen des PE 100-Rohres führt. Das ist der wesentliche Punkt dieser neuen Rohrart.

Dünnwandige PEHD-Rohre, z. B. Rohre SDR 17 (PE 100 PN 10), verhalten sich bei mechanischen Verbindungen durch die geringere Steifigkeit ungünstiger als Rohre SDR 11 (PE 80 PN 10) bzw. die erfindungsgemäßen Rohre. Die Verbindungstechnik ist deshalb wesentlich robuster und weniger anfällig gegen Montagemängel. Auf die bei SDR 17-Rohren üblichen Stützhülsen bei Verwendung mechanischer Kupplungen kann bei dem erfindungsgemäßen Rohrtyp deshalb auch verzichtet werden.

Eine Verschweißung mit Standard-Elektroschweißmuffen ist problemlos möglich.

Es ist bekannt, daß Rohre aus Polyethylen der Diffusion von Geschmacksstoffen, z. B. aromatischen Kohlenwasserstoffen, wenig Widerstand entgegensetzen. Werden normale PEHD-Rohre, z. B. in stark landwirtschaftlich genutzten Böden, als Trinkwasserleitungen eingesetzt, muß damit gerechnet werden, daß der Güllegeschmack durch die PE-Rohrwand durchdiffundiert und das Trinkwasser geschmacklich negativ beeinflußt.
Die Wanddicke der Rohre spielt natürlich für den Umfang der Beeinträchtigung des Trinkwassers ebenfalls eine Rolle, genau wie das spezifische Gewicht des verwendeten PE-Typs. Materialtypen mit geringer Dichte haben einen höheren Diffusionswert als Materialtypen mit hoher Dichte. PE 100 ist deshalb weniger kritisch bei Diffusionsproblemen zu sehen als PE 80. Da allerdings die Wanddicke etwa linear die diffundierende Menge an Geschmacksstoffen beeinflußt, wird die geringere Diffusionsneigung durch die geringere Wanddicke bei PE 100 wieder aufgehoben.

Deshalb beinhaltet das erfindungsgemäße Rohr in der VPE-Außenschicht eine Diffusionssperre in Form von z. B. Polyamid. Die hevorragende Sperrwirkung von Polyamid, der relativ dicke Mantel mit der Sperrschicht und das günstigere Diffusionsverhalten des PE 100-Tragerrohres, ergeben eine ausgezeichnete Diffusionssperrwirkung für das Gesamtrohr, so daß es sich besonders für den Einsatz in kontaminierenden Böden geeignet.

Neben dem als Diffusionssperre in der Verschleißschicht eingelagerten Polyamid können auch metallische Mikrolamellen Verwendung finden. Eingesetzt werden z. B. Aluminiumplättchen, deren Breite und Länge erheblich größer ist als deren Wanddicke. Dadurch findet bei der Extrusion der Deckschicht eine zur Extrudatoberfläche parallele Orientierung der Metallplättchen statt. Dabei sind die Metallplättchen praktisch in von der Konzentration abhängigen Abständen übereinander in der Deckschicht geschichtet. Dadurch wird die Diffusionsstrecke für diffundierende Bestandteile von außen in das Durchflußgut oder umgekehrt so vergrößert, daß eine Diffusion von Geschmack- und Geruchstoffen praktisch nicht mehr stattfindet.

In den folgenden Beispielen kommen die Vorteile des erfindungsgemäßen Rohraufbaues deutlich zum Ausdruck:

### Beispiel 1:

Ein Druckwasserrohr aus Polyethylen hoher Dichte vom Typ PE 80 mit 50 mm Rohraußendurchmesser, ausgelegt für einen Betriebsdruck von 10 bar, hat eine Wanddicke von 4,6 mm. Das ergibt für das Standardrohr einen Innendurchmesser von 50 -9,2 = 40,8 mm.

Wird dieses Standardrohr durch einen Rohraufbau nach der Erfindung ersetzt, ergibt sich folgende Rechnung:

Bei Verwendung eines Polyethylens hoher Dichte vom Typ PE 100 für das Trägerrohr ergibt sich für ein Rohr mit 50 mm Rohraußendurchmesser, ausgelegt für einen Betriebsdruck von 10 bar, mit einem Innendurchmesser von 40,8 mm eine notwendige Wanddicke von 2.8 mm.

Für die nicht tragende Verschleißschicht aus vernetztem Polyethylen (VPE) bleibt also zum Erreichen des normalen Außendurchmessers von 50 mm eine Wanddicke von 1,8 mm. Diese Wanddicke von 1,8 mm ist wegen der Verschleißfestigkeit von vernetztem Polyethylen (VPE) völlig ausreichend, um das Trägerrohr aus Polyethylen hoher Dichte beim Einziehen in Erdbohrungen auch über mehrere 100 m Länge zu schützen.

### Beispiel 2:

Druckrohre werden in erster Linie nach der zu erwartenden maximalen Innendruckbelastung dimensioniert, bei Standard-Trinkwasserohren z. B. 10 bar.

Daraus errechnet sich für ein Rohr aus PE 80 und einem Außendurchmesser von 110 mm eine Wanddicke von 10,0. Das ergibt ein Außendurchmesser-/Wanddickenverhältnis (SDR) 11.

Ein Rohr aus PE 100, ebenfalls ausgelegt auf 10 bar, würde eine Wanddicke von 6,6 mm (SDR 17) benötigen.

Zusätzlich zum Innendruck müssen die Rohre jedoch noch zusätzliche Belastungen aufnehmen, z. B. durch das Aufwickeln der Rohre für die Lieferung großer Rohrlängen in Ringbunden, die Biegebeanspruchung bei der Verlegung und letztendlich auch durch Auflasten im verlegten Zustand durch das Erdreich und durch Verkehrslasten,

Die zuletzt genannten Beanspruchungen belasten das Rohr jedoch nicht mit Zugspannungen, sondern mit Biegespannungen, zum Beispiel bei Erdauflasten durch Deformation der Rohre oder auf Beulung bei der Rohrbiegung.

Bei der Innendruckbelastung geht die Erhöhung der Wanddicke linear in die Festigkeitsberechnung ein. Bei Scheiteldruckbelastungen und bei Beulbelastungen geht die Wanddicke in die Berechnungen mit der 3. Potenz ein, wobei in beiden Fällen der Elastizitätsmodul des Materials noch als lineare Größe einfließt.

PE 80-Matenaltypen haben in der Regel einen Elastizitätsmodul von 800 N/mm², während PE 100-Typen E-Module um etwa 1200 N/mm² haben, also etwa 50 % mehr.

Bei den vorgenannten PN 10-Rohren hat das PE 80-Rohr mit 10 mm Wanddicke, ohne Berücksichtigung des E-Modul-Unterschiedes, eine 4-fach höhere Steifigkeit als das PE 100-Rohr mit 6,6 mm Wanddicke. Bei Berücksichtigung des unterschiedlichen Elastizitätsmoduls hat das PN 10-Rohr aus PE 80 insgesamt noch eine 2,7-fache Steifigkeit gegenüber einem PN 10-Rohr aus PE 100.

Dadurch ist in der Praxis die Biege- und Wickelfähigkeit der dünnwandigeren PE 100-Rohre stark eingeschränkt. Der Steifigkeitsverlust, also die Scheiteldruckbelastbarkeit, ist ebenfalls mit 2,7-facher Steifigkeit anzusetzen.

Aus den vorgenannten Gründen ist es deshalb in vielen Fällen nicht möglich, das neue Material PE 100 wirtschaftlich einzusetzen, weil man die mögliche Wanddickenreduzierung, die sich aus der erhöhten Zugbelastbarkeit ergibt, aus Stabilitätsgründen nicht ausschöpfen kann.

Bei Rohren gemäß der Erfindung ist der Einsatz des PE 100-Materials ohne Einschränkung möglich, da die zum PE 80-Rohr fehlende Restwanddicke im Beispiel 3,5 mm durch die Verschleißschutzschicht aus VPE bzw. die VPE/PA-Diffusionssperrschicht ausgeglichen wird. Die erfindungsgemäßen Rohre sind deshalb in der möglichen Beanspruchung bei Transport, Verlegung und Betrieb mit den bisher bekannten Rohren aus PE 80 voll vergleichbar.

## Patentansprüche

1. Rohr aus thermoplastischem Kunststoff, bestehend aus wenigstens zwei Schichten von Thermoplasten unterschiedlicher Eigenschaften, wobei das Innenrohr als tragende Rohrschicht an seinem Außenumfang von einer Deckschicht ummantelt ist und wobei die Deckschicht aus einem vemetzten Polyethylen (VPE) besteht,
**dadurch gekennzeichnet,**
**dass** der Thermoplast des Innenrohres ein Polyethylen hoher Dichte (PEHD) mit einer Langzeitfestigkeit > 8 N/mm² ist, dass der Aufbau Innenrohr - Deckschicht in der Wanddicke des Gesamtquerschnittes identisch ist mit der Wanddicke eines einschichtigen Rohres aus Polyethylen hoher Dichte (PEHD) mit einer Langzeitfestigkeit gleich oder kleiner 8 N/mm, und dass die Innendruckbelastbarkeit des Aufbaues Innenrohr - Deckschicht wenigstens der eines einschichtigen Rohres aus PEHD mit einer Langzeitfestigkeit gleich oder kleiner 8 N/mm² entspricht.

2. Rohr nach Anspruch 1, **dadurch gekennzeichnet, dass** die Deckschicht maximal die Hälfte des Gesamtquerschnittes einnimmt.

3. Rohr nach Anspruch 1, **dadurch gekennzeichnet, dass** die Deckschicht und das Innenrohr an ihren Berührungsflächen miteinander verschweißt sind.

4. Rohr nach Anspruch 1, **dadurch gekennzeichnet, dass** der Deckschicht ein Zuschlagsstoff mit Diffusionssperrwirkung beigemischt ist.

5. Rohr nach Anspruch 4, **dadurch gekennzeichnet, dass** der Zuschlagsstoff ein Polyamid ist.

6. Rohr nach Anspruch 4, **dadurch gekennzeichnet, dass** der Zuschlagsstoff aus metallischen Mikrolamellen besteht.

7. Rohr nach Anspruch 6, **dadurch gekennzeichnet, dass** die metallischen Mikrolamellen in einem Mengenanteil von 3 bis 10 Gewichtsprozent dem Deckschichtmaterial beigemischt sind.

8. Rohr nach Anspruch 5, **dadurch gekennzeichnet, dass** der Polyamidanteil der Deckschicht zwischen 10 und 80 Gewichtsprozent liegt.

## Claims

1. Tube made of thermoplastic material, consisting of at least two layers of thermoplastics with different properties, in which the internal tube is the supporting tube layer and is encased in a covering layer made of latticed polyethylene,
**characterised by**:
the thermoplastic of the internal tube is a polyethylene with high density (PEHD) with a long-term strength > 8 N/mm², the structure of the internal tube/covering layer is identical in the wall thickness of the overall cross-section with the wall thickness of a single-layered tube made of polyethylene with high density (PEHD) with a long-term strength of less than 8 N/mm², and that the internal pressure resistance of the structure comprising the interior tube/covering layer is at least equivalent to that of a single-layered tube made of PEHD with a long-term strength equal to or less than 8 N/mm².

2. Tube as specified in Claim 1, **characterised by**: the covering layer takes up not more than half of the overall cross-section.

3. Tube as specified in Claim 1, **characterised by**: the covering layer and the internal tube are welded together at their contact surfaces.

4. Tube as specified in Claim 1, **characterised by**: the covering layer contains an additive with a diffusion blocking effect.

5. Tube as specified in Claim 4, **characterised by**: the additive is a polyamide.

6. Tube as specified in Claim 4, **characterised by**: the additive consists of metallic microlamellae.

7. Tube as specified in Claim 6, **characterised by**: the metallic microlamellae are mixed in a proportion of 3 to 10 percent by weight to the material of the covering layer.

8. Tube as specified in Claim 5, **characterised by**: the proportion of polyamide in the covering layer lies between 10 and 80 percent by weight.

## Revendications

1. Tube thermoplastique constitué d'au moins deux couches de thermoplastiques de propriétés différentes, le tube intérieur en tant que couche de base étant recouvert d'une couche sur son pourtour extérieur, cette couche extérieure étant en polyéthylène réticulé (PER),
**caractérisé en ce que**
le thermoplastique du tube intérieur est un polyéthylène haute densité (PE-HD) avec une résistance à long terme > 8 N/mm², **en ce que** la structure tube intérieur - couche extérieure est identique dans l'épaisseur de paroi de la section entière, à l'épaisseur de paroi d'un tube monocouche en polyéthylène haute densité (PE-HD) doté d'une résistance à long terme égale ou inférieure à 8 N/mm, et **en ce que** sa résistance à la pression intérieure de la structure tube intérieur - couche extérieure correspond au moins à un tube monocouche en PE-HD doté d'une résistance à long terme égale ou inférieure à 8 N/mm.

2. Tube selon la revendication 1, **caractérisé en ce que** la couche extérieure représente maximum la moitié de la section entière.

3. Tube selon la revendication 1, **caractérisé en ce que** la couche extérieure et le tube intérieur sont soudés l'un à l'autre par leur surface de contact.

4. Tube selon la revendication 1, **caractérisé en ce que** la couche extérieure contient un additif qui a pour effet de rendre le tube imperméable à la diffusion.

5. Tube selon la revendication 4, **caractérisé en ce que** l'additif en question est un polyamide.

6. Tube selon la revendication 4, **caractérisé en ce que** l'additif est constitué de micro-lamelles métalliques.

7. Tube selon la revendication 6, **caractérisé en ce que** les micro-lamelles métalliques sont mélangées à la matière de la couche extérieure dans des proportions de 3 à 10 % du poids.

8. Tube selon la revendication 5, **caractérisé en ce que** la part de polyamide de la couche extérieure se situe entre 10 et 80 % du poids.
